# EUROPEAN PATENT APPLICATION

(11) **EP 0 905 213 A2**
(43) Date of publication of application: **31.03.1999**
(21) Application number: 98307435.2
(22) Date of filing: 14.09.1998
(51) Int. Cl.: C10B 53/00, C10B 1/04, C10B 57/18

(54) **A method of producing a clean gas from biodegradable waste material**

(30) Priority: 13.09.1997 GB 9719429
(71) Applicant: Shawton Engineering Limited, Newton-le-Willows, WA12 8DN (GB)
(72) Inventor: Patrick, Donald, Warrington, Cheshire WA5 1RB (GB)
(74) Representative: Hill, Richard

(57) **Abstract**

A method of producing clean gas from a biodegradable waste material comprises breaking down the biodegradable waste material into a gas by pyrolysis. The pyrolysis takes place at a temperature greater than 1200°C. After pyrolysis particulate residue having a diameter greater than 25µm is filtered out using a cyclon type centrifugal filter (12). The gas is then cooled by passage through a refrigerator (14) for cooling. Finally, the gas is passed through a bag filter (18) which filters out particulate residue having a diameter substantially greater than 10µm. The clean gas produced can be used to power a gas powered generator or a boiler to produce heat, for example, for kiln drying or heating. Apparatus for carrying out the method is also disclosed in which the pyrolysis is carried out within a chamber (11) which is shaped so as to minimise the production of shock waves.

## Description

This invention relates to a method of producing clean gas from biodegradable waste material, which clean gas can be used, after cleaning, as a fuel for a gas powered generator arrangement

Disposal of biodegradable waste material has become a problem since legislation in the United Kingdom and throughout Europe at least has reduced the possibility for landfill and offshore disposal. Furthermore incineration plants which have been used to incinerate biodegradable waste material have previously produced gaseous and other by-products which are atmospheric pollutants or can contribute to the Greenhouse Effect and the production of such products is no longer permitted.

It is an object of the present invention to provide a method of producing a clean gas from biodegradable waste material. It is a further object of the present invention to utilise the clean gas produced to drive a gas powered generator arrangement whereby electricity can be generated.

Thus and in accordance with a first aspect of the present invention therefore there is provided a method of producing a clean gas from biodegradable waste material, said method comprising breaking down said biodegradable waste material into a gas by pyrolysis at a temperature substantially greater than 1200°C, filtering out particulate residue having a diameter substantially greater than 25µm using a centrifugal filter means, cooling said gas in a cooling means and filtering out particulate residue having a diameter substantially greater than 10µm.

With this method it is possible to produce a clean gas which can be used as a fuel for a gas generator arrangement, the material not resulting in the production of atmospheric pollutants or Greenhouse gases. Pyrolysis at a temperature in excess of 1200°C ensures that hydro carbons and dioxins are broken down and the use of filtering down to 10µm also ensures that particulate pollutants are also removed from the gas.

Preferably the pyrolysis takes place within a shaped chamber, the chamber being shaped so as to prevent or at least minimise the production of shock waves in the gas in the chamber during pyrolysis. Preferably the chamber is formed from a ceramic material which has the ability to withstand thermal expansion from ambient to 1200°C in approximately 30 minutes. The use of a ceramic material capable of withstanding rapid thermal expansion greatly assists in the reduction of shock waves in the gas in the chamber.

Additionally, if desired, shock absorbing means can be provided disposed in the chamber which further assist in the minimisation of the effects of shock waves in the gas.

Preferably the particulate matter having a diameter substantially greater than 25µm is filtered out using a centrifugal filter commonly known as "a cyclon". Preferably more than one cyclon filter is provided and in one embodiment two such filters are provided through which gas passes sequentially.

Preferably the cooling of the gas is achieved by air cooling or refrigeration.

Preferably the filtering out of particulate matter having a diameter substantially greater than 10µm is achieved by use of a bag filter which is preferably formed from a polyaramid material. Additionally it is possible, in one or more of the filtering stages of this method to spray water or an aqueous alkaline solution onto the gas. Such water or aqueous solution coagulates with any of the particulate matter remaining in the gas. This coagulation increases the weight and dimension of the coagulated particulate matter and thereby causes particulate matter which ordinarily has a size lower than the abovementioned limits to exceed these limits and therefore be filtered out.

It is a further preferred feature that a breakdown device be provided which can mechanically, or in any other manner as desired or as appropriate, break down any waste material in the chamber which is either not combusted due to it not being in a position where pyrolysis is taking place, for example if bridging occurs in the chamber, or which causes an obstruction in the chamber.

Furthermore it is also preferred that the method includes an additional step of feeding the clean gas to a gas powered generator arrangement whereby electricity and/or heat can be generated. Any heat generated may be utilised to heat up water in a boiler or for any other process equipment as desired or as appropriate.

According to a second aspect of the present invention therefore there is provided apparatus for carrying out the method of Claim 1 comprising a chamber in which biodegradable waste material can be pyrolysed to form a gas, said pyrolysis taking place at substantially greater than 1200°C, first centrifugal filter means to filter out particulate matter in the gas having a size substantially greater than 25µm, a cooling device to cool said gas and second filter means to filter out particulate matter in the gas having a size substantially greater than 10µm.

Preferably the clean gas produced by the apparatus is used as fuel for a gas powered generator arrangement whereby electricity can be generated from the waste. Alternatively the gas is used in a burner system for example for kiln drying or heat conditions.

The second aspect of the invention may be some or all of the features of the first aspect of the invention.

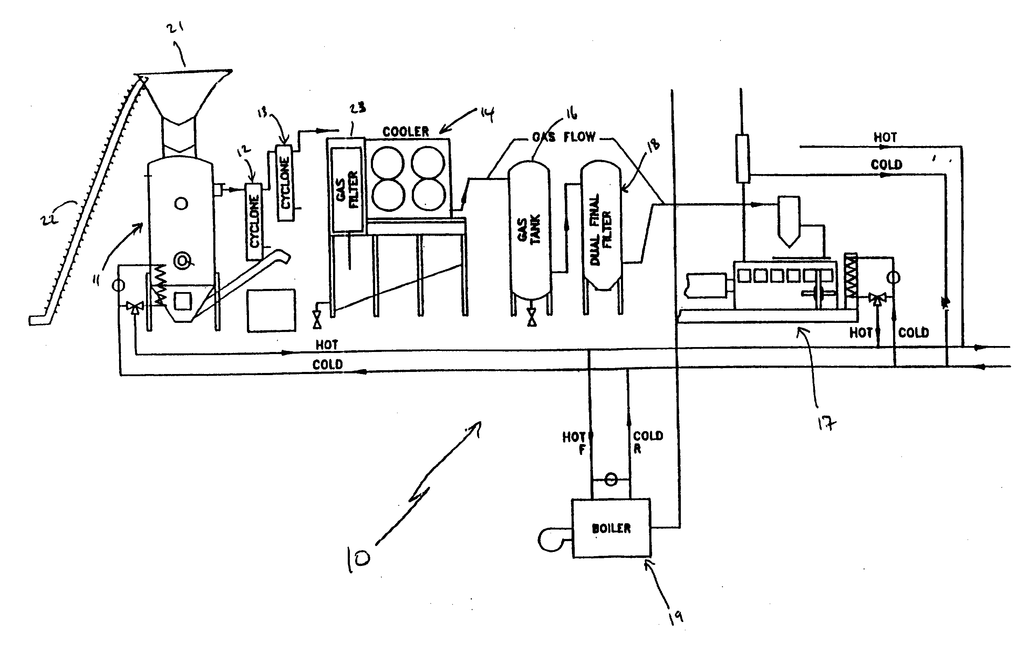

The invention will now be described further by way of example only and with reference to the accompanying drawing, the single figure of which shows one embodiment of apparatus for carrying out the method of the invention.

Referring now to the figure, there is shown apparatus 10 for producing a clean gas from biodegradable waste material. The apparatus comprises a combustion chamber 11 linked to first, second and third filter devices 12, 13, a cooling device 14 to receive gas from the filter devices 12, 13, 14 and to cool the same, a gas storage tank 16 for temporary storage of the clean gas and a gas powered generator arrangement 17 to which gas passes selectively from the gas storage tank 16. Additionally a further filter 18 is provided between the gas storage tank 16 and the generator arrangement 17. Furthermore a boiler 19 may also be provided which can take up heat generated by the combustion process to heat water.

The combustion chamber 11, in the embodiment shown in the drawing, has a inlet funnel 21 through which biodegradable waste material passes from a conveyor arrangement 22 into the chamber 11 through an opening at a top thereof. Pyrolysis of the biodegradable waste material occurs towards the bottom of the chamber 11. The combustion chamber 11 has an air inlet (not shown) provided therein through which controlled amounts of air can be introduced selectively into the combustion chamber 11. In one embodiment the air inlet takes the form of a louvre type of arrangement which can be moved between open and closed positions and any position therebetween. The combustion chamber 11 is preferably formed from a ceramics material and more particularly can be formed from a mixture of various ceramics materials. The importance of the material from which the combustion chamber is formed is that such material imparts a rapid thermal expansion capability in the chamber. In the present invention the material is chosen such that there is rapid thermal expansion from ambient to 1200°C in approximately 30 minutes.

A breakdown device (not shown) is provided which extends into the interior of the combustion chamber 11 from the exterior thereof which is operable to mechanically break down any waste material which becomes trapped in the chamber 11 away from the area of pyrolysis. It is possible to provide detectors (not shown) which detect material which has been trapped and which activates a breakdown device (not shown) to either move or break down such material. The breakdown device (not shown) in this latter case can be a microwave or ultrasound device.

The first and second filter devices 12, 13 comprise a centrifugal filter of a type commonly referred to as "a cyclon". The first and second filter devices 12, 13 are connected sequentially as shown in the figure, however, in order to achieve the object of the invention, only one is required.

The third filter device 23 also comprises a centrifugal filter device of a cyclon type. The third filter device 23 has a spray device (not shown) associated therewith which is operable to spray a water or other aqueous solution, preferably alkaline, onto the gas for a purpose to be described hereinafter.

The combined effect of the first to third filters 12, 13 is to filter out particulate matter which has a size greater than 25µm which is present in the gas following combustion.

The cooling device 14 comprises a conventional air cooler or refrigeration device which operates to cool the gas passing through it.

The gas storage tank 16 is of conventional form and preferably includes a mist eliminator and no further description will be given herein.

The gas powered generator arrangement 17 comprises a conventional engine suitably converted to run on the gas produced as a result of the combustion process.

In use, biodegradable waste material passes from the conveyor 22 into the combustion chamber where pyrolysis takes place. If necessary, the breakdown device is utilised to break down or move material which may be trapped within the combustion chamber away from the area where pyrolysis is taking place. The temperature in the chamber is monitored very carefully and is maintained at a temperature substantially above 1200°C. The temperature is maintained at this level in order to ensure that hydrocarbons and dioxins which can cause the production of unwanted atmospheric pollutants formed during pyrolysis are broken down. These products can also lead to the formation of tar which can also affect the running of the gas generator. The temperature is maintained by using the air inlet (not shown) to control the flow of air into the chamber 11 which either increases or decreases the temperature of combustion and determines the type of gas produced.

The pyrolysis of the waste material produces a gas which contains particulate material of various sizes. Various of these particles can cause unwanted atmospheric pollution or can lead to the production of other materials or compounds which may lead to a degradation in performance of the generator arrangement.

In conventional chambers in which biodegradable waste is combusted, shock waves can be produced which can damage the internal structure of the chamber. With the present invention, the chamber 11 is formed from a particular mixture of ceramics material which has particular desired thermal expansion properties. In the case of the present invention the particular ceramics materials have thermal expansion properties which enable it to rapidly expand between ambient and 1200°C in approximately 30 minutes. This rapid expansion of the material of the combustion chamber 11 counteracts the creation of shock waves, thereby reducing their destructive effect on the walls of the chamber 11.

After pyrolysis, the gas containing particulate matter passes into the first cyclon filter 12 and, if present, the second cyclon filter 13. The gas then passes from these filters into a second cyclon filter 23 in which water or an alkaline aqueous solution is sprayed onto the gas. At this stage, the water or aqueous solution dilutes and coagulates with the particulate matter remaining in the gas. This causes the size and weight of the coagulated particles to increase and therefore these coagulated particles drop to the bottom of the cyclon and are eliminated from the gas. The second filter 23 can additionally include a mist eliminator which may take the form of a fine mesh or foam which is of a size so as to prevent passage of water molecules therethrough and will therefore remove the water molecules from the gas. These filters 12, 13, 23 act to remove from the gas particulate matter having a size greater than 25µm.

The gas then passes through a cooling device which acts to condense any unwanted vapour remaining in the gas.

After cooling, the gas is then passed for temporary storage in a gas tank 16.

The clean gas stored in the gas tank can be used for any suitable purpose, however in the embodiment shown in the drawing, the gas is used as a fuel for the generator arrangement 17.

However, prior to passing into the generator arrangement 17, the gas can be passed through a further filter device 18 which comprises a conventional bag filter. The bag filter acts to remove particulate matter of a size greater than 10µm. This ensures that no particulate matter which could be an atmospheric pollutant or degrade the performance of the generator arrangement 17.

The gas is then passed to a suitably adapted generator arrangement for which it is a fuel. The generator arrangement produces electricity which can be used for any purpose as desired or as appropriate.

A boiler 19 can additionally be provided which can extract any heat generated during the process, and particularly during combustion. Alternatively electricity generated by the generator can be utilised to power the boiler.

It will be appreciated that using the method and apparatus of the present invention biodegradable waste can be recycled and useful products obtained, thereby avoiding the necessity for dumping or storage of waste.

It is of course to be understood that the invention is not intended to be restricted to the details of the above embodiment which are described by way of example only.

## Claims

1. A method of producing clean gas from biodegradable waste material, said method comprising breaking down said biodegradable waste material into a gas by pyrolysis at a temperature substantially greater than 1200°C, filtering out particulate residue having a diameter substantially greater than 25µm using a centrifugal filter means, cooling said gas in a cooling means and filtering out particulate residue having a diameter substantially greater than 10µm.

2. A method according to Claim 1 in which the pyrolysis takes place within a shaped chamber, the chamber being shaped so as to prevent or at least minimise reduction of shock waves in the gas in the chamber during pyrolysis.

3. A method according to Claim 2 in which the chamber is formed from a ceramic material which has the ability to withstand thermal expansion from ambient to 1200°C in approximately 30 minutes.

4. A method according to Claim 2 or Claim 3 in which a shock absorbing means is provided disposed within the chamber which further assists in the minimisation of the effects of shock waves in the gas.

5. A method according to any one of Claims 1 to 4 in which the particulate matter having a diameter substantially greater than 25µm is filtered out using a centrifugal filter commonly known as "a cyclon".

6. A method according to Claim 5 wherein more than one filter of a cyclon type is provided.

7. A method according to Claim 6 in which two filters of the cyclon type are provided through which gas passes sequentially.

8. A method according to any one of Claims 1 to 7 in which the cooling of the gas is achieved by air cooling or refrigeration.

9. A method according to any one of Claims 1 to 8 in which the particulate matter having a diameter substantially greater than 10µm is filtered out using a bag filter.

10. A method according to Claim 9 in which the bag filter is formed from a polyaramid material.

11. A method according to any one of Claims 1 to 10 further including the additional step of spraying water or an aqueous alkaline solution onto the gas during either of the filtering stages.

12. A method according to any one of Claims 1 to 11 wherein a breakdown device is provided which can operate to breakdown any waste material in the chamber which is either no combusted due to not being in a position where pyrolysis is taking place or which causes an obstruction in the chamber.

13. A method according to Claim 12 wherein the breakdown device comprises a mechanical device to cause physical breakdown of material.

14. A method according to any one of Claims 1 to 13 wherein the method includes an additional step of feeding the clean gas to a gas power generator arrangement whereby electricity and/or heat can be generated.

15. A method according to Claim 14 wherein the heat generated by the generator arrangement is utilised to heat up water in a boiler.

16. An apparatus for carrying out the method of Claim 1 comprising a chamber in which biodegradable waste material can be pyrolysed to form a gas, said pyrolysis taking place at substantially greater than 1200°C, first centrifugal means to filter out particulate matter in a gas having a size substantially greater than 25µm, a cooling device for said gas and second filter means to filter out particulate matter in the gas having a size substantially greater than 10µm.

17. Apparatus according to Claim 16 wherein clean gas produced by the apparatus is fed to a gas powered generator arrangement whereby electricity can be generated.

18. Apparatus according to Claim 16 in which clean gas produced by the apparatus is fed to a burner system which can, for example, be provided within a kiln dryer or heater.
